# EUROPEAN PATENT SPECIFICATION

(11) **EP 1 194 490 B1**
(45) Date of publication and mention of the grant of the patent: **20.07.2005**
(21) Application number: 00940527.5
(22) Date of filing: 12.06.2000
(51) Int. Cl.: C09D 11/00, D06P 5/30

(54) **INK COMPOSITIONS**
TINTENZUSAMMENSETZUNGEN
COMPOSITIONS D'ENCRE

(30) Priority: 23.06.1999 GB 9914544
(43) Date of publication of application: 10.04.2002
(73) Proprietor: Avecia Inkjet Limited, Blackley, Manchester M9 8ZS (GB)
(72) Inventor: SHAWCROSS, Andrew, Paul, Blackley, Manchester M9 8ZS (GB); HOLBROOK, Mark, Manchester M9 8ZS (GB); EWING, Paul, Nicholas, Manchester M9 8ZS (GB); KENWORTHY, Mark, Manchester M9 8ZS (GB); MACFAUL, Philip, Manchester M9 8ZS (GB)
(74) Representative: Mayall, John
(86) International application number: PCT/GB2000/002280
(87) International publication number: WO 2000/078876

(56) References cited:
- EP-A- 0 921 166
- WO-A-98/14524
- US-A- 4 334 932

## Description

This invention relates to compositions, to inks and to their use in ink jet printing.

Ink jet printing methods involve printing an image onto a substrate using ink droplets emitted from a small nozzle without bringing the nozzle into contact with the substrate. Over recent years ink jet printers have become popular because they are quieter and more versatile than impact printers, for example conventional basket typewriters are noisy and the images they can print are restricted to the shapes moulded onto the end of each mechanical lever. The most popular ink jet printers are the thermal and piezoelectric.

WO 98/14524 of Avecia describes ink compositions comprising water, a water-dissipatable polyester, a dye and various solvents.

Although the inks described in WO 98/14524 are stated as having good properties, there is a continual need to improve the performance of ink jet printing inks. In particular, low viscosities are desirable because thermal ink jet printers can have difficulties in firing high viscosity inks. The quality of printed text is also of commercial importance in terms of edge sharpness, optical density, light fastness, mottle and ink penetration. If inks penetrate too much then undesirable "strike through" occurs where the printed image is visible on the reverse side of printed paper. Ink jet printing inks are also required to have good storage stability and operability, i.e. low tendency to block the tiny nozzles used in ink jet print heads. Furthermore, the inks should be compatible with materials they come into contact with, e.g. they should not attack the printer cartridge or printhead.

We have now found that certain compositions are particularly well suited for use in ink jet printing.

According to the present invention there is provided a composition comprising water, organic solvent, a water-dissipatable polymer and a dye having one or more sulphonate groups and a solubility in water at 20°C of from 0.001 to 4% by weight.

The water-dissipatable polymer preferably bears ionised carboxy and/or sulphonate groups, especially ionised sulphonate groups, because these assist water dissipatability of the polymer. Such groups can be chain pendant and/or terminal.

The water-dissipatable polymer is preferably a water-dissipatable acrylic, polyurethane or polyester, more preferably a water-dissipatable polyester. The water-dissipatable polyester can be prepared using conventional polymerisation procedures known to be effective for polyester synthesis. Thus, it is well known that polyesters contain carbonyloxy (i.e -C(=O)-O-) linking groups and may be prepared by a condensation polymerisation process in which an acid component (including ester-forming derivatives thereof) is reacted with a hydroxyl component. The acid component may be selected from one or more polybasic carboxylic acids, e.g. di- and tri-carboxylic acids or ester-forming derivatives thereof, for example acid halides, anhydrides or esters. The hydroxyl component may be one or more polyhydric alcohols or phenols (polyols), for example, diols, triols, etc. (It is to be understood, however, that the polyester may contain, if desired, a proportion of carbonylamino linking groups -C(=O)-NH- (i.e. amide linking groups) by including an appropriate amino functional reactant as part of the "hydroxyl component"; such as amide linkages). The reaction to form a polyester may be conducted in one or more stages. It is also possible to introduce in-chain unsaturation into the polyester by, for example, employing as part of the acid component an olefinically unsaturated dicarboxylic acid or anhydride.

Polyesters bearing ionised sulphonate groups may be prepared by using at least one monomer having two or more functional groups which will readily undergo an ester condensation reaction (e.g. carboxyl groups, hydroxyl groups or esterifiable derivatives thereof) and one or more sulphonic acid groups (for subsequent neutralisation after polyester formation) or ionised sulphonate groups (i.e. neutralisation of the sulphonic acid groups already having been effected in the monomer) in the synthesis of the polyester. In some cases it is not necessary to neutralise sulphonic acid groups since they may be sufficiently strong acid groups as to be considerably ionised in water even without the addition of base. Often, the sulphonic acid or ionised sulphonate containing monomer is a dicarboxylic acid monomer having at least one ionised sulphonate substituent (thereby avoiding any need to effect neutralisation subsequent to polyester formation). (Alternatively, alkyl carboxylic acid ester groups may be used in place of the carboxylic acid groups as ester-forming groups). Such a monomer will therefore be part of the acid component used in the polyester synthesis.

Preferred polybasic carboxylic acids which can be used to form the polyester have two or three carboxylic acid groups. For example, one can use C₄ to C₂₀ aliphatic, alicyclic and aromatic compounds having two or more carboxy groups and their ester forming derivatives (e.g. esters, anhydrides and acid chlorides), and dimer acids such as C36 dimer acids. Specific examples include adipic acid, fumaric acid, maleic acid, succinic acid, itaconic acid, sebacic acid, nonanedioic acid, decanedioic acid, 1,4-cyclohexanedicarboxylic acid, 1,3-cyclohexanedicarboxylic acid, 1,2-cyclohexanedicarboxylic acid, terephthalic acid, isophthalic acid, phthalic acid and tetrahydrophthalic acid and their acid chlorides. Anhydrides include succinic, maleic, phthalic and hexahydrophthalic anhydrides.

Preferred polyols which can be used to form the polyester include those having from 2 to 6, more preferably 2 to 4 and especially 2 hydroxyl groups per molecule. Suitable polyols having two hydroxy groups per molecule include diols such as 1,2-ethanediol, 1,3-propanediol, 1,4-butanediol, 1,6-hexanediol, 2,2-dimethyl-1,3- propanediol (neopentyl glycol), the 1,2-, 1,3- and 1,4-cyclohexanediols and the corresponding cyclohexane dimethanols, diethylene glycol, dipropylene glycol, and diols such as alkoxylated bisphenol A products, e.g. ethoxylated or propoxylated bisphenol A. Suitable polyols having three hydroxy groups per molecule include triols such as trimethylolpropane (1,1,1-tris (hydroxymethyl)ethane). Suitable polyols having four or more hydroxy groups per molecule include pentaerythritol (2,2-bis(hydroxymethyl)-1,3-propanediol) and sorbitol (1,2,3,4,5,6-hexahydroxyhexane).

Compounds having two or more groups which readily undergo an ester condensation reaction and have one or more sulphonate groups are dicarboxylic acid monomers having at least one ionised sulphonate group. Examples of such compounds are aromatic dicarboxylic acids having an ionised sulphonate group, for example those of the formula: 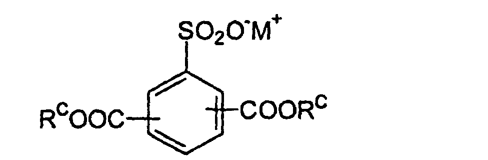 wherein M is a cation (preferably sodium, lithium or potassium); and each R^{c} independently is H, a cation or C₁₋₄-alkyl (preferably methyl or ethyl). Preferred compounds of the above formula are of formula: 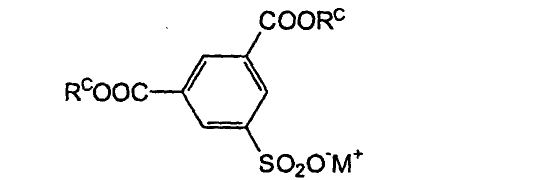 wherein M and R^{c} are as defined above. Particularly preferred is the mono sodium salt, this material being known as sodio-5-sulphoisophthalic acid (SSIPA).

Other useful compounds which have two or more groups which readily undergo an ester condensation reaction and have one or more sulphonate groups are dihydroxy monomers having at least one sulphonate group, especially those of the formula: 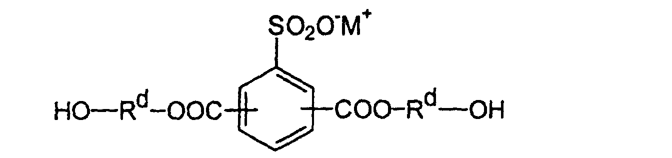 wherein M is as hereinbefore defined above and each R^{d} independently is alkylene, preferably C₂₋₄- alkylene. Preferred compounds of the above formula are: 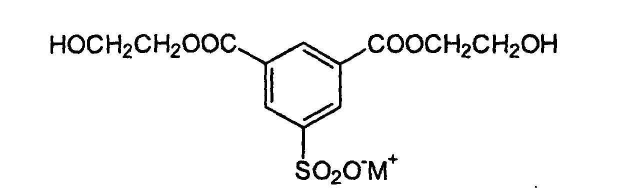 wherein M is as hereinbefore defined.

Polyesters bearing ionised carboxy groups can be prepared by various means. For example, if the hydroxyl component of the reactants is stoichiometrically in excess of the acid component, a hydroxyl-terminated polyester can be formed, which may be subsequently converted to a carboxy terminated polyester by wholly or partially reacting the hydroxyl groups with an appropriate reagent (e.g. an acid anhydride or a dicarboxylic acid). Alternatively, terminal carboxy functionality may be directly introduced by employing an appropriate stoichiometric excess of the acid component reactants. In another alternative, chain-pendant carboxy groups may be introduced by using reagents such as dimethylol propionic acid (DMPA) since if appropriate reaction condition are employed (e.g. polymerisation temperature below 150°C) the hindered carboxy group thereof does not take part to any significant extent in the ester-forming reactions during the polyester synthesis and the DMPA effectively behaves as a simple diol. Chain-pendant and/or terminal carboxy groups could also be introduced by employing a tri- or higher functionality carboxylic acid or anhydride in the polyester synthesis, for example, trimellitic acid or anhydride. Combinations of the above procedures could also be used. It is thus seen that terminal or side-chain carboxy groups or both can be introduced as desired. These can be fully or partially neutralised with an appropriate base to yield ionised carboxy groups. The counter ions used may be as for the ionised sulphonate groups described above (apart from H⁺ since the carboxylic acid groups themselves are normally insufficiently ionised to provide a significant amount of ionised carboxy groups - although F substituents would increase acid strength), with alkali metal ions such as Na⁺, Li⁺ and K⁺ again being particularly preferred, and ammonium and organic amine derived cations less preferred because some have an undesirable odour.

The water-dissipatable polyester may optionally have hydrophilic non-ionic segments, for example within the polyester backbone (i.e. in-chain incorporation) or as chain-pendant or terminal groups. Such groups may act to contribute to the dispersion stability or even water-solubility of the polyester. For example, polyethylene oxide chains may be introduced into the polyester during its synthesis by using as part of the hydroxyl component, ethylene oxide-containing mono, di or higher functional hydroxy compounds, especially polyethlene glycols and alkyl ethers of polyethylene glycols, examples of which include :

R^{e}-O-(CH₂CH₂O)ₙ-H

HO-(CH₂CH₂-O)ₙ-H

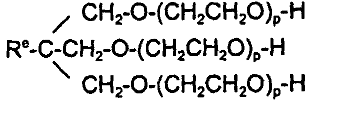

wherein R^{e} is C₁₋₂₀-alkyl, preferably C₁₋₄-alkyl, more preferably methyl; n is 1 to 500; and p is 1 to 100.

A small segment of a polyethylene oxide chain could be replaced by a propylene oxide or butylene oxide chain in such non-ionic groups, but should still contain ethylene oxide as a major part of the chain.

The amount of ionised sulphonate and/or carboxy groups present in the polyester should be sufficient to provide or contribute to water-dissipatability of the polyester, although it should not be so high as to render the resulting polyester unacceptably water-sensitive. This amount will depend, inter alia, on factors such as the hydrophilicity/hydrophobicity of units provided by other monomers in the polyester synthesis or any surfactants (if used), and also the relative proportions of ionised sulphonate/carboxy groups. With regard to the last mentioned point, ionised sulphonate groups are more effective at providing or contributing to water-dissipatability than ionised carboxy groups and so can be used at considerably lower levels in comparison to ionised carboxy groups.

If the polyester is wholly or predominantly sulphonate stabilised (by which is meant the water dissipatability-providing groups are provided wholly or predominately by ionised sulphonate groups). The ionised sulphonate group content is preferably within the range from 7.5 to 100 milliequivalents (more preferably 10 to 75 milliequivalents and particularly 11 to 56 milliequivalents) per 100 g of polyester. When using SSIPA as the monomer for providing the ionised sulphonate groups, the amount of this monomer used in the polyester synthesis, based on the weight of all the monomers used in the polyester synthesis, will usually be within the range from 2 to 20% by weight (more usually 3 to 15% by weight). The carboxylic acid value (AV) of the polyester which is predominantly sulphonate stabilised, i.e. an AV based on the carboxylic acid groups only (i.e. excluding sulphonate groups) will generally be within the range of from 0 to 100 mgKOH/g, more preferably 0 to 50 mgKOH/g, especially 0 to 25 mgKOH/g, more especially 0 to 10mgKOH/g.

If the polyester is predominantly stabilised by ionised carboxy groups, the carboxylic acid value AV of the polyester is preferably within the range of from 20 to 140 mgKOH/g (more preferably 30 to 100 mgKOH/g).

Usually, the polyester is either predominantly sulphonate-stabilised or predominantly carboxylate stabilised (preferably the former).

If the polyester contains polyethylene oxide chains, the polyethylene oxide chain content should preferably not exceed 25% by weight (and more preferably should not exceed 15% by weight), based on the total weight of the polyester, in order to avoid unacceptable water-sensitivity. Therefore the amount is preferably 0 to 25% by weight (more preferably 0 to 15% by weight) based on the total weight of polyester.

The water-dissipatable polyester preferably has a number average molecular weight Mn of up to 30,000. The Mn is preferably in the range from 1000 to 30,000, more preferably 1500 to 25,000, especially 2000 to 20,000. These Mn lead to particularly good storage stability for the resultant inks. The measurement of Mn is well known to those skilled in the art, and may for example be effected using gel permeation chromatography in conjunction with a standard polymer such as polystyrene or polymethylmethacrylate of known molecular weight.

The water-dissipatable polyester preferably has a hydroxyl number of from 0 to 225mg KOH/g, more preferably 0 to 125mg KOH/g, especially from 0 to 50mgKOH/g.

The Tg of the water-dissipatable polyester (i.e. the temperature at which the polymer changes from a glassy, brittle state to a plastic, rubbery state) is preferably in the range -38°C to 105°C, more preferably -20 to 70°C, especially -10°C to 60°C.

The esterification polymerisation processes for making the polyesters for use in invention composition are known and need not be described here in more detail. Suffice to say that they are normally carried out in the melt using catalysts, for example a tin-based catalyst, and with the provision for removing any water or alcohol formed from the condensation reaction.

The water-dissipatable polyester may be dissipated in water by adding the solidified melt directly into water. The solidified melt is preferably in a form such as flake (which can often be obtained directly from the melt) or communised solid (obtained for example by grinding). Alternatively, water can be added directly to the hot polyester melt until the desired solids content/viscosity is reached. Still further, the polyester may be dissipated in water by adding an aqueous pre-dissipation (or organic solvent solution) of the polyester to the water phase.

The water-dissipatable polyesters normally do not need an external surfactant when being dissipated into water, although such surfactants may be used to assist the dissipation if desired and in some cases can be useful in this respect because additional surfactants reduce the required amount of dissipating groups (i.e. sulphonate, and (mono alkoxy)polyalkylene chains if used).

Water-dissipatable polyesters can also be purchased from Eastman Kodak Company and Avecia Limited. Examples include Eastman AQ29D and AQ55W.

The water-dissipatable polymer may also be formed by performing free radical polymerisation of olefinically unsaturated monomers in the presence of a polyester. This gives what could be called a polyester-acrylic hybrid. Olefinically unsaturated monomers which can be used include olefinically unsaturated carboxy functional monomers, e.g. acrylic acid, methacrylic acid, fumaric acid, itaconic acid and β-carboxyethyl acrylate; olefinically unsaturated monomers which are free from carboxy and hydroxy groups, e.g. 1,3-butadiene, isoprene, styrene, vinylidene halides, vinylidene esters and esters of acrylic acid and methacrylic acid, e.g. methyl (meth) acrylate, ethyl (meth)acrylate n-butyl (meth)acrylate and 2-ethyl hexyl (meth)acrylate; and olefinically unsaturated monomers having a hydroxy group e.g. N-methylol (meth)acrylamide and hydroxy C₂₋₈-alkyl esters of (meth)acrylic acid. If the polyester has been prepared using a component which has unsaturation therein, e.g. fumaric acid, maleic acid or muconic acid or allyl-containing dihydroxy or dicarboxy compounds, the product from the polyesterification reaction will have unsaturation incorporated into its structure which can take part in the free radical polymerisation to give a graft copolymer. The free radical polymerisation processes use a free-radical generating initiator system such as (for example) the redox radical initiator system tertiary butylhydroxide/isoascorbic acid and will take place in the aqueous phase, rather than in the melt. However, excessive amounts of acrylic polymer (whether formed in the presence of polyester which has unsaturation or is free from unsaturation) often leads to a deterioration in ink properties and it is preferred that no acrylic polymer is present or, if its is present, the amount is less than 40%, preferably less than 30%, more preferably less than 10% by weight relative to the weight of polyester.

Preferably the aqueous medium is water or a mixture of water and one or more organic solvent, more preferably a mixture comprising water, one or more water-immiscible organic solvent and one or more water-miscible organic solvent.

Preferably the dye having one or more sulphonate groups has a solubility in water at 20°C of from 0.001 to 3%, more preferably from 0.0015 to 3%, especially from 0.002 to 1% by weight.

Preferably the dye has from 1 to 4 sulphonate groups, especially 1 or 2 sulphonate groups. The preference for the dye to have the solubility specified above is because this leads to particularly valuable inks, providing a balance between good stability and wet-fastness properties. When the solubility is very high the inks usually have poor wet-fastness when printed on plain paper. When the solubility is very low the inks are often unstable. The claimed range of solubility appears to give a "dual" solubility, enhancing affinity for the water-dissipatable polymer without compromising wet-fastness of the ultimate print.

The water-solubility conferred by the sulphonate groups also improves performance of the compositions (compared to dyes having no sulphonate groups) in toxicology tests such as the Ames test. With the increasing demand for Ames negative inks the compositions are to be welcomed for their advantageous properties.

The dye may carry ionic and/or non-ionic water solubilising groups in addition to the sulphonate groups. Preferred additional ionic water-solubilising groups are selected from carboxylate, phosphonate, quartnemary ammonium and combinations thereof. Preferred non-ionic water-solubilising groups are selected polyalkyleneoxide groups, more preferably poly(C₂₋₄-alkylene)oxide groups, especially groups of the formula -(CₙH₂ₙ-O)m-R¹ wherein m has a value of from 2 to 20 (preferably 2, 3 or 4); n has a value of 2 or 3; and R¹ is H or C₁₋₄-alkyl. Examples of groups of the formula -(CₙH₂ₙ-O)ₘ-R¹ include:
-CH₂CH₂OCH₂CH₂OH,
-CH₂CH₂OCH₂CH₂OCH₃,
-CH₂CH₂CH₂OCH₂CH₂OH,
-CH₂CH₂OCH₂CH₂CH₂OCH₃,
-CH₂CH₂CH₂OCH₂CH₂OCH₃.

In USA the word "sulphonate" is often spelt "sulfonate". These two spellings have the same meaning.

In a preferred embodiment the dye carries a non-ionic water-solubilising group.

Preferably the dye further has an alkyl group, preferably a C₁₋₂₀-alkyl group, more preferably a C₂₋₁₂-alkyl group, especially a C₁₋₁₀-alkyl group, more especially a C₂₋₉-alkyl group. Examples of such groups include methyl, ethyl, n-propyl, n-butyl, sec-butyl, n-pentyl, n-hexyl, n-heptyl and n-octyl groups.

Useful classes of dyes include anthraquinones, phthalocyanines, pyrrolines, triphenodioxazines, methines, benzodifuranones, coumarins, indoanilines, benzenoids, xanthenes, phenazines, quinophthalones, pyridones, aminopyrazoles, pyrollidines, styrylics and especially azo dyes. Examples of preferred azoics are monoazo, disazo and trisazo dyes; especially preferred azoics contain a heterocyclic group.

The dyes are preferably in a purified form, preferably over 90%, more preferably over 95%, especially over 98% pure.

The compositions preferably exist as a solution, emulsion, micro-emulsion, dispersion or micelle. Preferably the compositions are inks, especially inks suitable for use in a thermal and/or piezoelectric ink jet printers.

Preferably the compositions contain less than 100ppm, more preferably less than 50ppm, especially less than 20ppm in total of divalent metal cations, trivalent metal cations and halide anions. "ppm" means parts per million by weight relative to the weight of the composition. Compositions of this purity may be prepared by purifying an impure composition, or the components which go into the composition, using standard purification techniques. Suitable techniques include reverse osmosis, ultrafiltration, ion exchange and combinations thereof.

For best results the compositions are prepared by mixing (i) a solution of the dye in water, an organic solvent or a mixture of water and an organic solvent; with (ii) a mixture of the water-dissipatable polymer and water, optionally containing an organic solvent; wherein said surfactant is present in (i) or (ii) or (i) and (ii). Addition of said surfactant after the dye solution and water-dissipatable polymer solution have been mixed works less well.

Preferably the composition has a viscosity below 30cP, more preferably below 20cP, especially in the range 1 cP to 10cP, at 20°C.

Preferably the composition has a surface tension of 20 to 55, more preferably 25 to 40, especially 27 to 35 dynes/cm.

Preferably the composition contains a surfactant, more preferably a surfactant having a sulpho or sulphate group, a non-ionic surfactant free from carbon-carbon triple bonds, or a mixture thereof.

Surfactants carrying sulpho (-SO₃⁻) groups include alkyl benzene sulphonic acid salts (e.g. Arylan™ surfactants from Akcros); aromatic sulphonic acid salts (e.g. Eltesol™ surfactants from Albright & Wilson); and preferably mono- and di- alkyl (especially mono- and di- C₄ to C₁₈-alkyl) sulphosuccinates and mono- and di-alkyl sulphosuccinamates (e.g. Empimin™ surfactants from Albright & Wilson), mono- and di-alkyl (especially mono- and di- C₄⁻ to C₈-alkyl), ethoxy succinates (e.g. Empimin™ sufactactants from Albright and Wilson). Especially preferred anionic surfactants are di-isooctyl sulphosuccinates, especially the sodium, potassium, lithium and ammonium and substituted ammonium salts thereof.

Surfactants carrying sulphate groups (-SO₄²⁻) include alcohol sulphates and ether sulphates, preferably hydroxy C₆₋₁₈-alkyl sulphates and C₆₋₁₈-O(CH₂CH₂O)ₓ SO₃H wherein X is from 1 to 10 inclusive. Such surfactants are available under the Empicol trade mark from Albright & Wilson.

The preferred non-ionic surfactants include fatty alcohol alkoxylates (e.g. Synperonic A or 91 from ICI); fatty acid alkoxylates (e.g. Empilan Bq™ surfactants from Albright & Wilson); alkyl and aryl phenol alkoxylates (e.g. Empilan Np™ surfactants from Albright & Wilson); also fatty acid esters of polyethylene glycols e.g. (Ethylan™ A series from Ackros); castor oil ethoxylates (e.g. Dehscofix Co™ surfactants from Albright & Wilson); sorbitan esters and their ethoxylates (e.g. Span™ and Tween™ surfactants from Aldrich); and ethylene oxide-propylene oxide block copolymers (e.g. Synperonic PE™ surfactants from ICI), in each case being free from carbon - carbon triple bonds.

Preferably the surfactant has a number average molecular weight below 1000.

The amount of each component in the composition will vary according to the depth of shade required and the properties desired. Typically, however, the composition will comprise :
(i) from 30 to 95 parts, more preferably from 40 to 80 parts of water;
(ii) from 1 to 70 parts, more preferably from 5 to 60 parts, especially from 10 to 30 parts of organic solvent;
(iii) from 0.1 to 20 parts, more preferably from 0.5 to 10 parts, especially from 0.5 to 5 parts of said dye;
(iv) from 0.25 to 40 parts, more preferably from 0.5 to 20 parts, especially from 1 to 8 parts of water-dissipatable polymer; and
(v) from 0 to 10 parts, more preferably from 0 to 7 parts, especially from 0 to 5 parts of surfactant;
wherein all parts are by weight and the total number of parts of (i) + (ii) + (iii) + (iv) + (v) adds up to 100.

The number of parts of the water-dissipatable polymer is calculated on a 100% solids basis. For example 50g of a 20% solids polymer is taken as 10g (or 10 parts) of polymer.

The organic solvent (as mentioned in (ii) above) optionally comprises a water-miscible organic solvent and a water-immiscible organic solvent. However the presence of a water-immiscible solvent is not essential and, in one embodiment, the composition is free from water-immiscible organic solvents.

Suitable water-immiscible organic solvents are as described in WO 98/14524, page 11, lines 16 to 30, which are incorporated herein by references thereto, and optionally substituted nicotinamides e.g. nicotinamide-N-oxide and nicotinamide; optionally substituted furfuryl alcohol e.g. 2,5-furandimethanol and furfuryl alcohol; optionally substituted tetrahydrofurfuryl alcohol, e.g. 5-methyl tetrahydrofuran-2-methanol, methyl tetrahydrofurfryl ether and tetrahydrofurfuryl alcohol; alkyl and aryl lactates e.g. butyl lactate and benzyl lactate; and mixtures of any two or more of the foregoing. Benzyl alcohol is especially preferred.

Suitable water-miscible organic solvents are as described in WO 98/14524, page 11, line 31 to page 12, line 7, which is incorporated herein by reference thereto.

The water-immiscible solvent preferably has a solubility in water at 20°C of up to 50g/l. The water-miscible solvent preferably has a solubility in water at 20°C of more than 50g/l.

When the composition contains both a water-miscible organic solvent and a water-immiscible organic solvent the weight ratio is preferably 19:1 to 1:1, more preferably 8:1 to 1:1, especially 5:1 to 1:1.

The compositions may be prepared by mixing the components thereof in any order. Conveniently the water-dissipatable polymer is coloured with the dye and the resultant coloured water-dissipatable polymer is then mixed with the remaining components of the composition. Suitable methods for coloring the water-dissipatable polymer are described in WO 98/14524, page 10, line 16 to page 11, line 12, which is incorporated herein by reference thereto.

Based on the preferences expressed above, in a preferred composition:
(a) the water-dissipatable polymer has at least one ionised carboxy and/or sulphonate group;
(b) the dye having one or more sulphonate groups has a C₁₋₁₀-alkyl group; and
(c) the composition contains less than 100ppm in total of divalent metal cations, trivalent metal cations and halide ions, and has a viscosity below 30cP and a surface tension of 20 to 55 dynes/cm at 20°C.

The compositions of the invention are particularly useful as ink jet printing inks, demonstrating a low tendency for blocking the nozzles of thermal ink jet printers, good fastness to light and water and good storage stability.

If desired the composition may be used as an ink or as a liquid concentrate which is itself used to make an ink.

According to a second feature the present invention there is provided a process for printing an image on a substrate comprising applying thereto a composition according to the first aspect of the invention by means of an ink jet printer.

The ink jet printer emits droplets of the composition onto a substrate from a nozzle without bringing the nozzle into contact with the substrate. Preferably the ink jet printer is a thermal or piezoelectric ink jet printer. Normally the ink jet printer will be fitted with a printer head which is not adversely affected by the contents of the composition, e.g. it may be coated or otherwise treated to withstand the solvents contained in the composition.

The substrate is preferably a paper, an overhead projector slide or a textile material. Preferred textile materials are cotton, polyester and blends thereof.

Preferred papers are plain or treated papers which may have an acid, alkaline or neutral character. Examples of commercially available treated papers include HP Premium Coated Paper (available from Hewlett Packard Inc), HP Photopaper (available from Hewlett Packard Inc), Stylus Pro 720 dpi Coated Paper, Epson Photo Quality Glossy Film (available from Seiko Epson Corp.), Epson Photo Quality Glossy Paper (available from Seiko Epson Corp.), Canon HR 101 High Resolution Paper (available from Canon), Canon GP 201 Glossy Paper (available from Canon), and Canon HG 101 High Gloss Film (available from Canon).

When the substrate is a textile material the process for printing an image thereon according to the invention preferably further comprises the step of heating the resultant printed textile, preferably to a temperature of 50°C to 250°C.

The compositions of the present invention may also be used for the preparation of colour filters, for example those used in flat bed displays.

A third aspect of the present invention provides a paper, an overhead projector slide or a textile material printed with a composition according to the second aspect of the present invention or by means of a process according to the first aspect of the present invention.

A fourth aspect of the present invention provides an ink jet printer cartridge comprising a chamber and an ink wherein the ink is present in the chamber and the ink is a composition according to the first aspect of the present invention.

The invention is further illustrated by the following examples in which all parts and percentages are by weight unless specified otherwise. In these Examples the following abbreviations are used :
Paper XA is Xerox 4024 from Rank Xerox.
Paper SEC GF is Epson Photo Quality Glossy Paper available from Seiko Epson
Corp.
Paper HG201 is Canon High Gloss 201 from Canon.
"-" means not measured.
Fascat™ 4101 is an organotin based catalyst from Elf-Atochem Ltd.
Empimin™ MH is a 40% solution of di-sodium N-cocoyl sulphosuccinamate from
Albright and Wilson Ltd.
Initiator V65 is an azo initiator.
BZ is benzyl alcohol. 2P is 2-pyrrolidone.
DIOSS is diisooctyl sulpho succinate (a surfactant).

### Preparation of Water-Dissipatable Polymers

The following are examples of resins suitable for use in this invention.

### Resin 1

| **Monomer** | **Abbreviation** | **Weight (g)** |
|---|---|---|
| neopentyl glycol | A | 15 |
| diethylene glycol | B | 10 |
| isophthalic acid | C | 45 |
| sodio-5-sulpho-isophthalic acid | D | 10 |
| Hexane-1;6-diol | E | 10 |
| Methoxy PEG 750 | F | 10 |
| Sodium acetate | G | 0.2 |
| Fascat 4101 | H | 0.1 |

To a glass reactor fitted with distillation column and condenser were charged ingredients A, B, D, E, F, G and 50% of C and 50% of H. The contents were heated with stirring to a reaction temperature of 210°C until the mixture was clear and the acid value was <10 mgKOH/g. At this point the remainder of C and H were charged and the temperature raised to 230°C. The reaction was continued under reduced pressure until an acid value of 9.4 mgKOH/g was obtained. The polymer was further characterised by a hydroxyl value = 12.8 mgKOHg, ICI Cone and Plate Viscosity @ 125°C = >500 poises and a Tg (onset) = 18°C. The number average molecular weight as determined by gel permeation chromatography (PS Equivalent) was 1800. The polymer was readily dispersed in warm distilled water to give a clear solution having a solids content of 20% w/w hereinafter referred to as Resin 1

### Resin 2

| **Component Number** | **Component Name** | **Amount (g)** |
|---|---|---|
| 1 | butyl acrylate | 13.5 |
| 2 | methylmethacrylate | 13.5 |
| 3 | methacrylic acid | 3 |
| 4 | MEK | 41.25 |
| 5 | 3-butylmercaptan | 0.9 |
| 6 | Initiator V65 | 1.23 |

All components were added to a one-litre baffled round bottomed flask fitted with a stirrer and condenser and slowly heated under agitation and a flow of dry nitrogen up to the reaction temperature of 80°C. After 3 hours at this temperature the polymerisation was complete.

The mixture was allowed to cool; before removing the solvent by rotary evaporation to yield a water-dissipatable acrylic polymer as a viscous resinous material. The polymer was found to have an Mn of 3518 and a Mw of 6316.

The polymer (30g) was then added to a solution of ammonia (4g) in water (66g) and allowed to dissolve with mild agitation and heating to give a 30%w/w solids dissipation in water, hereinafter referred to as Resin 2.

### Resin 3

| **Materials** | **Weight (g)** |
|---|---|
| Pre-polymer | |
| Dimethylol propionic acid (DMPA) | 3.0 |
| 1,4 Cyclohexanedimethanol (CHDM) | 8.25 |
| Polypropylene glycol 1000 (PPG1000) | 27.91 |
| Isophorone diisocyanate (IPDI) | 35.84 |
| Dibutyl tin dilaurate (DBTDL) | 0.08 |
| N-methyl -2- pyrrolidinone (NMP) | 18.75 |

| Termination | |
|---|---|
| Jeffamine M1000 | 115.26 |

| Dispersion | |
|---|---|
| Ammonia (35% solution) | 1.38 |
| De-ionised water | 545.67 |

The DMPA, CHDM, PPG1000 and NMP were added to a reaction flask and stirred under an atmosphere of N₂.

The IPDI was added and the mixture was heated to 50°C with continuous stirring under nitrogen gas. The DBTDL was added and the mixture heated to 90°C and held there for 3 hours. The NCO content was measured periodically and when it reached 4.81% the Jeffamine M1000 was added and the mixture stirred for a further hour at 90°C.

The mixture was dispersed in the mixture of ammonia and water with continuous stirring, followed by a further hour stirred without applying heat. Particulate matter was removed by filtering the dispersion through a cloth having a pore size of 50µm, to give a first polyurethane polymer having a pH of 9.4, Mn 4343, Mw 6676, surface tension of 37.68mN/m and viscosity @ 10% solids of 2.47cps.

The first polyurethane polymer (10g) was diluted with de-ionised water (15g) and mixed thoroughly with a dispersion of NeoRez R-985 (18.75g, a commercially available polyurethane dispersion from Avecia) in de-ionised water (56.25g).
The resultant mixture is hereinafter referred to as Resin 3.

### Resin 4

| **Component** | **Name** | **Parts** |
|---|---|---|
| 1 | 2-pyrrolidone | 100 |
| 2 | butyl acrylate | 13.5 |
| 3 | sodium styrene sulphonate | 3 |
| 4 | styrene | 13.5 |
| 5 | 3-mercaptoproprionic acid | 0.9 |
| 6 | Initiator V65 | 0.99144 |
| 7 | 2-pyrrolidone | 16 |
| 8 | Initiator V65 | 0.24786 |
| 9 | 2-pyrrolidone | 4 |

Components 1 to 5 were placed in a reaction flask purged with nitrogen gas. The components were stirred under nitrogen until all reagents were dissolved. The reaction flask was heated to, and then held at 65°C. A solution of component 6 in component 7 was added and the reaction was continued with agitation for 4 hours. After 4 hours a solution of component8 in component 9 was added and the reaction allowed to continue for a further 1 hour before being cooled and filtered. The resultant water-dissipatable polymer had a solids content of 20%, a Mn of 2279 and a Mw of 3326 and is hereinafter referred to as Resin 4.

### Resin 5

| **Component** | **Name** | **Parts (weight)** |
|---|---|---|
| 1 | 2-pyrrolidone | 100 |
| 2 | butyl acrylate | 13.5 |
| 3 | sodium styrene sulphonate | 3 |
| 4 | methylmethacrylate | 13.5 |
| 5 | 3-mercaptopropionic acid | 0.9 |
| 6 | Initiator V65 | 3.368 |
| 7 | 2-pyrrolidone | 16 |
| 8 | Initiator V65 | 0.842 |
| 9 | 2-pyrrolidone | 4 |

Components 1 to 5 were placed in a reaction flask purged with nitrogen gas. The components were stirred under nitrogen until a homogenous solution had formed. The mixture was then heated to 60°C and a solution of component 6 in component 7 was added. The mixture was kept at 65°C with agitation for 4 hours, after which a solution of component 8 in component 9 was added. The mixture was agitated at 65°C for a further 1 hour before cooling and storage in a bottle.

The resultant water-dissipatable acrylic polymer had a solids content of 20%, a Mn of 3460 and a Mw of 6319 and is hereinafter referred to as Resin 5.

### Resin 6

A water-dissipatable polymer was prepared as described for Resin 3 in WO 98/14524, (page 21 from "water-dissipatable polymer ("Resin 3")" to the end of page 21). This polymer is hereinafter referred to as "Resin 6".

### Resin 7

| **Component** | **Name** | **Parts (weight)** |
|---|---|---|
| 1 | methylethylketone | 100 |
| 2 | butyl acrylate | 10.5 |
| 3 | methacrylic acid | 3 |
| 4 | polyethylene glycol methacrylate mol wt 1000 | 3 |
| 5 | hydroxyethylmethacrylate | 3 |
| 6 | methylmethacrylate | 10.5 |
| 7 | 3-mercaptopropionic acid | 0.9 |
| 8 | Initiator V65 | 0.984 |
| 9 | methylethylketone | 16 |
| 10 | Initiator V65 | 0.246 |
| 11 | methylethylketone | 4 |

Components 1 to 7 were placed in a reaction flask purged with nitrogen gas. The contents were stirred under nitrogen until a homogenous solution had formed. The mixture was then heated to 65°C, a solution of component 8 in component 9 was added. The mixture was agitated at 65°C for 4 hours, after which a solution of component 10 in component 11 was added. The reaction was allowed to continue for a further 1 hour before cooling and bottling.

The resultant water-dissipatable acrylic polymer had a solid content of 20%, a Mn of 4264 and a Mw of 8157 and is hereinafter referred to as Resin 7.

### Preparation of Dyes

The following are examples of dyes suitable for use in this invention.

### Preparation of Dye 1:

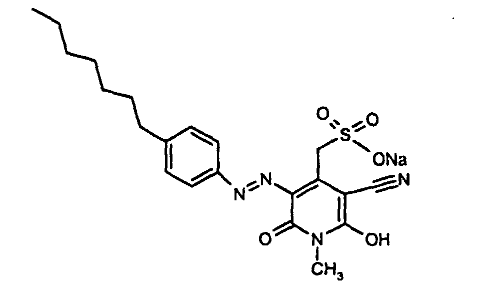

Dye 1 was prepared using stages 1a and 1b:

### Stage 1a

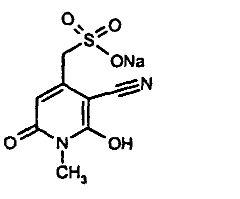

Ethyl 4-chloroacetoacetate (41.1g) was added dropwise to a suspension of sodium sulphite (35g) in water (40mls) at 60-70°C and the mixture was stirred at this temperature for 1.5 hours. N-methyl cyanoacetamide (24.5g) (prepared by the reaction of N-methylaniline with ethyl cyanoacetate) was added in one portion, followed by the dropwise addition of ethylene diamine (7.5g). The mixture was heated to 95°C and heated under reflux for 20hrs, cooled to 0°C and the pH adjusted to 1 using cone HCl. The mixture was stirred for 30 minutes and the resultant precipitate filtered-off. The product was washed with 2M HCl, slurried in acetone, filtered-off and dried to give 11g of the intermediate shown above.

### Stage 1b

4-Heptylaniline (9.76g) was placed in a flask with water (50ml) and N-methylpyrrolidone (50ml). The pH was adjusted to 4 with concentrated HCl to give a complete solution. A further 35mls of concentrated HCl was added and cooled to 0-5°C, whilst stirring. A 2M solution of sodium nitrite was added slowly (25ml), such that the temperature did not rise above 5°C. The mixture was stirred for 1 hr and the excess nitrous acid was destroyed using sulphamic acid. The resultant diazonium salt solution was slowly added to a solution of the product from stage 1a (16.4g) in water (40ml) at pH 6, keeping the temperature <5°C. The pH was adjusted to 6 using sodium acetate and the reaction allowed to rise to room temperature whilst stirring overnight. The product was filtered off, re-dissolved in water and chloride ions were removed by reverse osmosis. The product was dried in an oven to give Dye (1) (17.2g) having λmax at 436 nm.

Dye 1 has a solubility in water at 20°c of 0.005% w/v.

### Preparation of Dye 2:

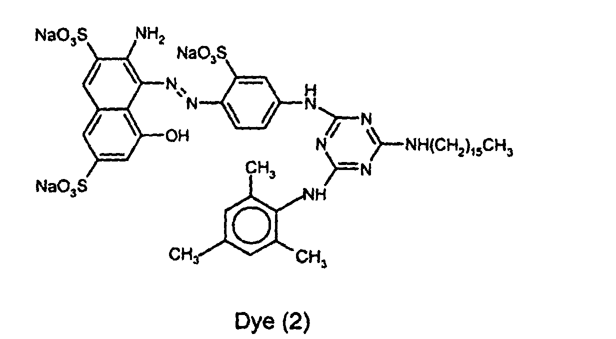

### Stage (i) : Diazotisation and Coupling

To N-acetyl *p*-phenylenediamine sulphonic acid (0.5moles) in water (400ml) was added concentrated hydrochloric acid (250ml) and the solution was cooled to 0-5°C. 2N sodium nitrite (250ml) was added dropwise over 5 minutes with stirring. After 15 minutes, excess nitrous acid was destroyed by the addition of sulphamic acid (0.2g). To the resulting suspension was added a solution of 2-amino-8-naphthol-3,6-disulphonic acid (0.5 moles in 600ml of water at pH6) and the pH was adjusted to 4 by the addition of sodium acetate. The mixture was stirred at 0-5°C for 4 hours before being allowed to warm to room temperature.

### Stage (ii) Hydrolysis

The acetyl group present on the product of stage (i) was removed by alkaline hydrolysis by adding concentrated sodium hydroxide (200ml) to the mixture resulting from stage 1 and heating at 70-80°C for 1.5 hours.

After cooling to room temperature, the pH was adjusted to 7 by the addition of concentrated hydrochloric acid. Sodium chloride (20% weight/volume) was added and the precipitated solid was collected by suction filtration, washed with 30% brine and dried at 70°C. Yield 132g (strength 45%).

### Stage (iii) Condensations

The product from stage (ii) (0.15moles) was dissolved in water (500ml) at pH7. Cyanuric chloride (0.17moles) was dissolved in acetone (300ml) and added dropwise over 10 minutes to the stirred solution at 0-5°C. The mixture was stirred for 40 minutes at this temperature before 2, 4, 6-trimethylaniline (0.165moles) dissolved in acetone (200ml) was added. The pH of the reaction mixture was raised to 7 using 2N sodium carbonate and this was maintained whilst the reaction was stirred at 35°C for 16 hours. Hexadecylamine (0.3mole) in acetone (200ml) was added and the reaction was raised to pH 9.5 and stirred at 75°C for 3 hours.

The mixture was cooled to room temperature and evaporated to dryness. The solid was slurried in methylated spirits, collected by suction filtration and washed with further methylated spirits.

### Stage (iv) Purification

The product of stage (iv) was redissolved in distilled water and dialysed using Visking tubing to a permeate conductivity of below 100µS. Yield 31.5g.

Dye 2 has a solubility in water at 20°C of 1.52% w/v and a λ max at 528 nm (50:50 water/methanol).

### Preparation of Dye 3:

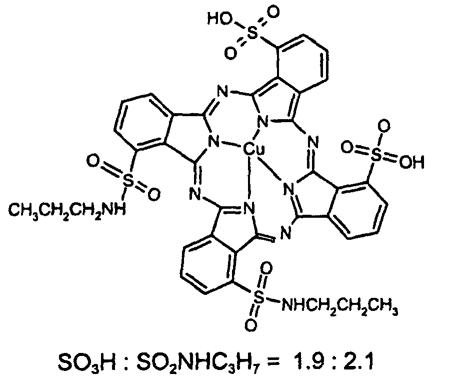

### Stage a

Copper phthalocyanine (8.64g) was added to chlorosulphonic acid (30ml) and heated to 150°C over the course of 1 hr and then maintained at this temperature for 16hrs. The reaction mixture was cooled to between 70 and 80°C, PCl₃ (5.25ml) was added and the mixture was then stirred at 90°C for 4hrs. The mixture was cooled and poured onto ice (200g) and the resultant precipitate was filtered-off, washed with ice water and used immediately in the next stage.

### Stage b

The product from stage a was added to a solution of propylamine (3.0g) in water (200ml) and stirred for 5hrs. The precipitated product was filtered-off and then redissolved in 80/20 acetone/ethyl acetate (800ml), filtered to remove insoluble impurities and evaporated down to give Dye 3 (12.5g).
Dye 3 has a solubility in water at 20°Cof 0.0027% w/v.

### Dye 4

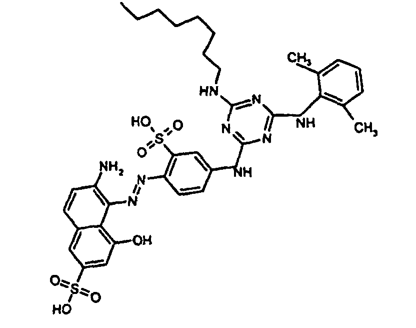

Acid Red 34 monoazo(43.2g) was dissolved in water (600ml) at < 5°C. Cyanuric Chloride (12.2g) dissolved in acetone (150ml) was added over 15 mins. After 1 hour at <5°C, 2,6- dimethyl aniline (8.0g) was added and the reaction maintained at pH 6.5 (by the addition of 2M sodium carbonate) and 35°C over 7 hours. Octylamine (23.2g) was added and reaction maintained at pH 9 and 70°C over 16 hours. The cooled suspension was dialysed to a conductivity of <100µS and dried at 70°C. The dried product was slurried in acetone (1 L), filtered, washed and dried to give the title dye in a yield of 42g, having a λmax at 522 nm (50:50 water/methanol). Dye 4 had a solubility in water of 20°C of 0.19% w/v.

### Dye A

Comparative Dye A was Pro-jet™ Cyan 1 obtained from Avecia Ltd. Comparative Dye A had a solubility in water at 20°C of 25% w/v.

### Examples 1 to 3 and Comparative Examples C1 to C3

Inks 1 to 3 and comparative inks C1 to C3 were prepared having the compositions described in Table 1 below wherein the figures are in parts by weight. In each case the relevant dye was dissolved in a mixture of the benzyl alcohol and 2-pyrrolidone and sonicated until the dye was in solution. Resin 1 (20% w/v in water) at pH 7.0 ± 0.5 was then added when indicated along with water and all additional components specified in Table 1.

In Table 1 Inks C1 to C3 correspond to Inks 1 to 3 except they contain no water-dissipatable resin.

**Table 1**

| | Ink 1 | Ink C1 | Ink 2 | Ink C2 | Ink 3 | Ink C3 |
|---|---|---|---|---|---|---|
| Dye 1 | 3 | 3 | | | | |
| Dye 2 | | | 4 | 4 | | |
| Dye 3 | | | | | 3 | 3 |
| BA | 12 | 12 | 12 | 12 | 12 | 12 |
| 2P | 20 | 20 | 20 | 20 | 20 | 20 |
| Resin 1 | 20 | | 20 | | 20 | |
| Water | 42 | 62 | 41 | 61 | 42 | 62 |
| DIOSS | 3 | 3 | 3 | 3 | 3 | 3 |

The inks were printed onto Xerox Acid (XA), SEC Glossy Film (SEC GF) or Canon HG201, using a JP190 Olivetti ink jet printer. The properties of the resultant prints are summarised in Table 2. To evaluate light fastness the prints were faded in an Atlas Ci35 Weatherometer for 100 hours. The degree of fade is expressed as ΔE or as the % OD loss where a lower figure indicates higher light fastness. ΔE is defined as the overall change in the CIE colour co-ordinates L*, a*, b* of the print and is expressed by the equation ΔE = (ΔL² + Δ a² + Δb²)^{0.5}. Water fastness was measured by suspending the print at 45° and running 0.5 ml of water down a section of print comprising 12 printed lines. Each line was approximately 3 mm wide and spaced approximately 5mm apart. When the water had dried the extent of ink staining on the unprinted areas was assessed by reference to a standard scale. A value of 10 would be classed as excellent water fastness and a value of 6 would be classed as very poor water fastness.

**Table 2**

| Dye | Ink | Paper | Optical Density | Wet Fastness | Light Fastness * |
|---|---|---|---|---|---|
| 1 | 1 | XA | 1.025 | 9.5 | 18.37 |
| 1 | 1 | SEC GF | 1.239 | 7 | 8.39 |
| 1 | C1 | XA | 1.069 | 9 | 37.61 |
| 1 | C1 | SEC GF | 1.617 | 10 | 52.43 |
| 2 | 2 | XA | 0.935 | 8 | 44.81** |
| 2 | 2 | HG 201 | 1.093 | 8 | 57.36** |
| 2 | C2 | XA | 0.955 | 8 | 55.39** |
| 2 | C2 | HG 201 | 1.212 | 10 | 80.86** |
| 3 | 3 | XA | 0.93 | 10 | 5.35 |
| 3 | 3 | SEC GF | 1.431 | 9.5 | 4.29 |
| 3 | C3 | XA | 0.887 | 10 | 8.69 |
| 3 | C3 | SEC GF | 1.35 | 10 | 15.69 |

| | | | | | |
|---|---|---|---|---|---|
| * ΔE after 100hrs, a lower figure indicates higher light fastness | | | | | |
| ** % OD loss after 100hrs irradiation, a lower figure indicates higher light fastness. A higher value of wet fastness indicates better wet fastness. | | | | | |

### Examples 4 and 5

Inks were prepared according to the formulations shown in Table 3. The inks were used to fill empty colour cartridges from an Olivetti JP192 ink jet printer. This printer was then used to print the inks on the range of substrates shown in Table 4. The optical density (ROD), wet fastness and light fastness of the prints were measured.

**Table 3**

| | Ink 4 | Ink 5 |
|---|---|---|
| Dye 4 | 3 | 3 |
| Butyl Cellosolve | 12 | 12 |
| 2-P | 20 | 20 |
| DIOSS | 3 | |
| Empimin MH | | 3 |
| Resin 2 (as 100% solids) | | 4 |
| Resin 6 (as 100% solids) | 4 | |
| Water | 58 | 58 |

**Table 4**

| Ink | Paper | Optical Density | Light Fastness | Wet Fastness |
|---|---|---|---|---|
| Ink 4 | XA | 0.979 | - | 9.5 |
| | SEC GF | 1.507 | - | 9.5 |
| | HG 201 | 1.743 | - | 10 |
| Ink 5 | XA | 0.965 | 22.49 | 9 |
| | SEC GF | 1.634 | 19.07 | 10 |
| | HG 201 | 1.506 | 14.33 | 10 |

### Example 6

Further inks may be prepared having the formulations described in Tables 5 and 6 below wherein the following abbreviations are used. These inks may be applied to a substrate such as plain paper using a piezo ink jet printer.
- FRU :: fructose
- Resin:: The number of parts by weight of resin is shown in brackets. The resins are preferably added as 20% w/w solution/dispersion in water.
- BZ :: Benzyl alcohol
- DEG:: Diethylene glycol
- DMB :: Diethyleneglycol monobutyl ether
- ACE:: Acetone
- IPA :: Isopropyl alcohol
- MEOH :: Methanol
- 2P :: 2-Pyrrolidone
- MIBK :: Methylisobutyl ketone
- SUR:: Surfactant A is sodium dodecyl benzene sulphonate; surfactant B is Nonyl phenol + 6.5 EO; surfactant C is diisooctyl sulphosuccinate of the formula

CH₃(CH₂)₃CH(C₂H₅)CH₂OCOCH(SO₃H)CH₂COOCH₂CH(C₂H₅)(CH₂)₃CH₃;

surfactant D is Tergitol 15-S-7(a secondary alcohol ethoxylate)
- PHO:: K₂PO₄
- TEN :: Triethanolamine
- NMP:: N-methyl pyrrolidone
- TDG :: Thiodiglycol
- CAP:: Caprolactam
- BUT:: Butylcellosolve

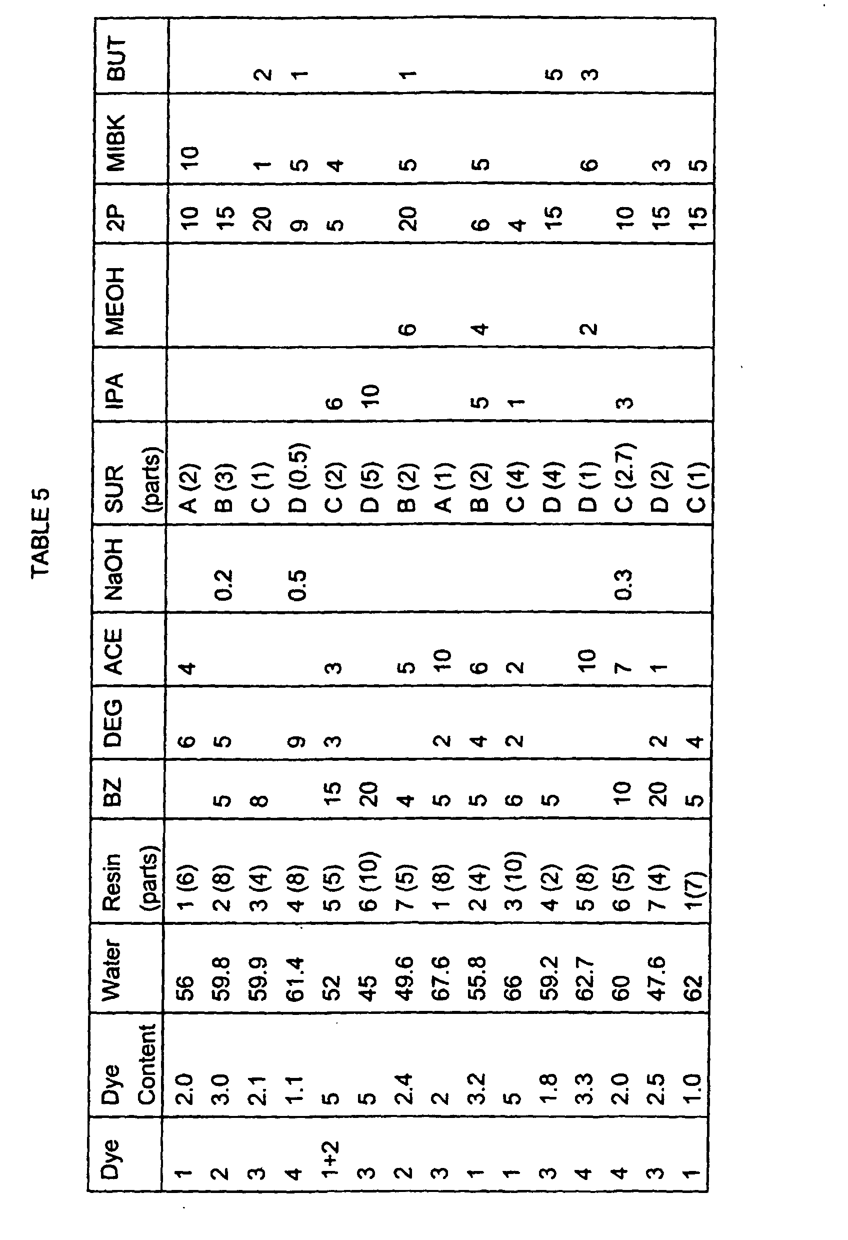

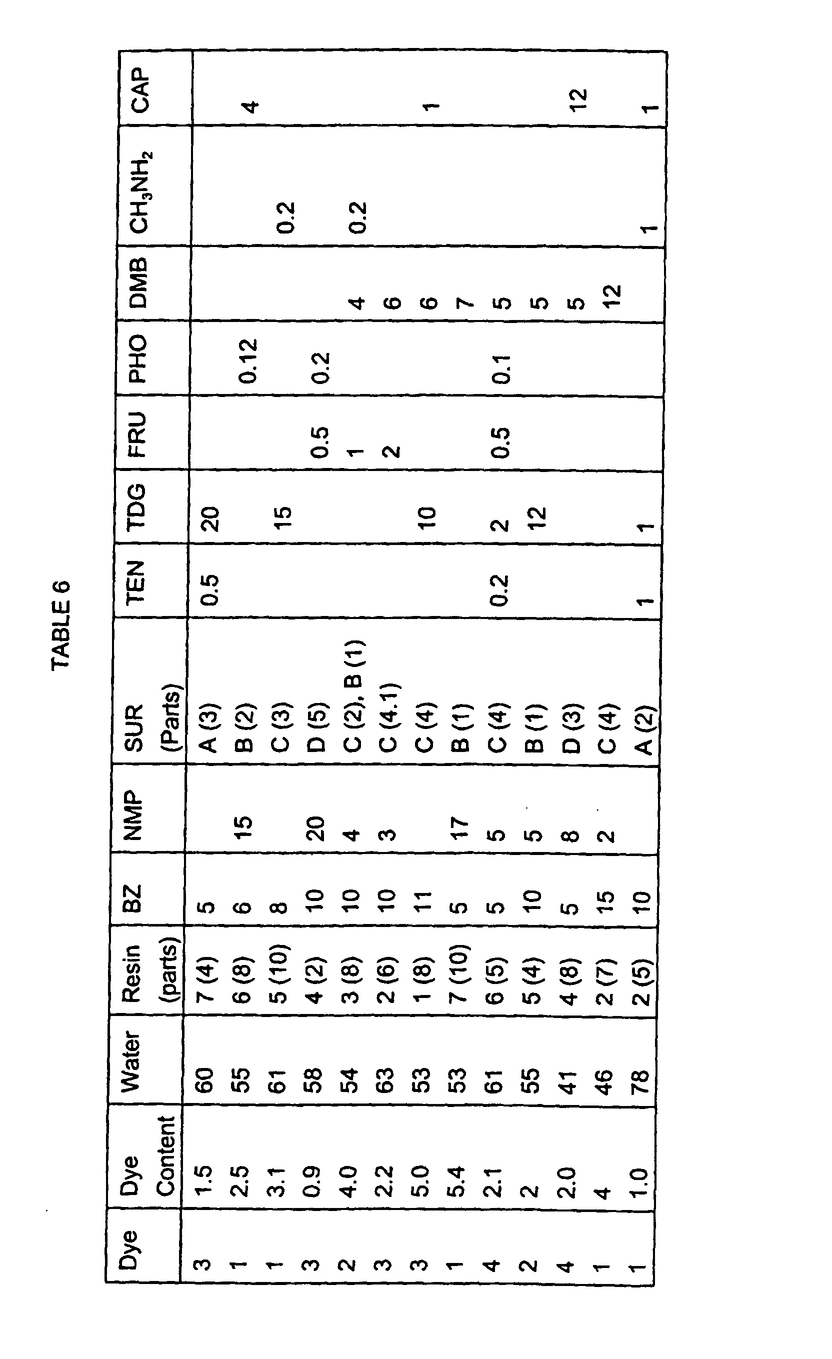

## Claims

1. A composition comprising water, organic solvent, a water-dissipatable polymer and a dye having one or more sulphonate groups and a solubility in water at 20°C of from 0.001 to 4% by weight.

2. A composition according to claim 1 wherein the water-dissipatable polymer bears ionised carboxy and/or sulphonate groups.

3. A composition according to any one of the preceding claims wherein the water-dissipatable polymer is a water-dissipatable polyester.

4. A composition according to any one of the preceding claims wherein the dye having one or more sulphonate groups has a solubility in water at 20°C of from 0.002 to 1% by weight.

5. A composition according to any one of the preceding claims wherein the dye has a C₁₋₁₀-alkyl group.

6. A composition according to any one of the preceding claims wherein the dye has a C₂₋₉-alkyl group.

7. A composition according to any one of the preceding claims which contains less than 100ppm in total of divalent metal cations, trivalent metal cations and halide ions.

8. A composition according to any one of the preceding claims which has a viscosity below 30cP at 20°C.

9. A composition according to any one of the preceding claims which has a surface tension of 20 to 55 dynes/cm.

10. A composition according to claim 1 wherein:
(a) the water-dissipatable polymer has at least one ionised carboxy and/or sulphonate group;
(b) the dye having one or more sulphonate groups has a C₁₋₁₀-alkyl group; and
(c) the composition contains less than 100ppm in total of divalent metal cations, trivalent metal cations and halide ions, and has a viscosity below 30cP and a surface tension of 20 to 55 dynes/cm at 20°C.

11. A composition according to any one of the preceding claims which contains a surfactant.

12. A process for printing an image on a substrate comprising applying thereto a composition according to any one of the preceding claims by means of an ink jet printer.

13. A paper, an overhead projector slide or a textile material printed with a composition according to any one of claims 1 to 11 or by means of a process according to claim 12.

14. An ink jet printer cartridge comprising a chamber and an ink, wherein the ink is present in the chamber and the ink is a composition according to any one of claims 1 to 11.

## Patentansprüche

1. Zusammensetzung, enthaltend Wasser, organisches Lösungsmittel, ein wasserverteilbares Polymer und einen Farbstoff mit mindestens einer Sulfonatgruppe und einer Wasserlöslichkeit von 0,001 bis 4 Gew.-% bei 20°C.

2. Zusammensetzung nach Anspruch 1, bei der das wasserverteilbare Polymer ionisierte Carboxy- und/oder Sulfonatgruppen trägt.

3. Zusammensetzung nach einem der vorhergehenden Ansprüche, bei der als wasserverteilbares Polymer ein wasserverteilbarer Polyester enthalten ist.

4. Zusammensetzung nach einem der vorhergehenden Ansprüche, bei der der Farbstoff mit der mindestens einen Sulfonatgruppe eine Wasserlöslichkeit von 0,002 bis 1 Gew.-% bei 20°C aufweist.

5. Zusammensetzung nach einem der vorhergehenden Ansprüche, bei der der Farbstoff eine C₁₋₁₀-Alkylgruppe enthält.

6. Zusammensetzung nach einem der vorhergehenden Ansprüche, bei der der Farbstoff eine C₂₋₉-Alkylgruppe enthält.

7. Zusammensetzung nach einem der vorhergehenden Ansprüche, bei der insgesamt weniger als 100 ppm an zweiwertigen Metallkationen, dreiwertigen Metallkationen und Halogenidionen vorliegen.

8. Zusammensetzung nach einem der vorhergehenden Ansprüche, deren Viskosität bei 20°C weniger als 30 cP beträgt.

9. Zusammensetzung nach einem der vorhergehenden Ansprüche, deren Oberflächenspannung bei 20 bis 55 dyn/cm liegt.

10. Zusammensetzung nach Anspruch 1, bei der:
(a) das wasserverteilbare Polymer mindestens eine ionisierte Carboxy- und/oder Sulfonatgruppe aufweist,
(b) der Farbstoff mit der mindestens einen Sulfonatgruppe eine C₁₋₁₀-Alkylgruppe enthält und
(c) die Zusammensetzung insgesamt weniger als 100 ppm an zweiwertigen Metallkationen, dreiwertigen Metallkationen und Halogenidionen enthält und bei 20°C eine Viskosität von weniger als 30 cP und eine Oberflächenspannung von 20 bis 50 dyn/cm aufweist.

11. Zusammensetzung nach einem der vorhergehenden Ansprüche, bei der zusätzlich ein Tensid enthalten ist.

12. Verfahren zum bildweisen Bedrucken eines Substrats, bei dem man darauf mit einem Tintenstrahldrucker eine Zusammensetzung gemäß einem der vorhergehenden Ansprüche aufträgt.

13. Papier, Overheadprojektorfolie oder Textilmaterial, bedruckt mit einer Zusammensetzung gemäß einem der Ansprüche 1 bis 11 oder nach einem Verfahren gemäß Anspruch 12.

14. Tintenstrahldruckerpatrone mit Kammer und Tinte, bei der die Kammer als Tinte eine Zusammensetzung gemäß einem der Ansprüche 1 bis 11 enthält.

## Revendications

1. Composition comprenant de l'eau, un solvant organique, un polymère susceptible d'être dissipé dans de l'eau et un colorant comportant un ou plusieurs groupes sulfonate et ayant une solubilité dans de l'eau à 20°C allant de 0,001 à 4% en poids.

2. Composition selon la revendication 1 dans laquelle le polymère susceptible d'être dissipé dans de l'eau porte des groupes carboxy et/ou sulfonate ionisés.

3. Composition selon l'une quelconque des revendications précédentes dans laquelle le polymère susceptible d'être dissipé dans de l'eau est un polyester susceptible d'être dissipé dans de l'eau.

4. Composition selon l'une quelconque des revendications précédentes dans laquelle le colorant comportant un ou plusieurs groupes sulfonate possède une solubilité dans de l'eau à 20°C allant de 0,002 à 1% en poids.

5. Composition selon l'une quelconque des revendications précédentes dans laquelle le colorant comporte un groupe alkyle en C₁-C₁₀.

6. Composition selon l'une quelconque des revendications précédentes dans laquelle le colorant comporte un groupe alkyle en C₂-C₉.

7. Composition selon l'une quelconque des revendications précédentes qui contient moins de 100 ppm au total de cations de métaux divalents, de cations de métaux trivalents et d'ions halogénure.

8. Composition selon l'une quelconque des revendications précédentes qui possède une viscosité inférieure à 30 cP à 20°C.

9. Composition selon l'une quelconque des revendications précédentes qui possède une tension superficielle de 20 à 55 dynes/cm.

10. Composition selon la revendication 1 dans laquelle:
(a) le polymère susceptible d'être dissipé dans de l'eau possède au moins un groupe carboxy et/ou sulfonate ionisé ;
(b) le colorant comportant un ou plusieurs groupes sulfonate renferme un groupe alkyle en C₁-C₁₀ ; et
(c) la composition contient moins de 100 ppm au total de cations de métaux divalents, de cations de métaux trivalents et d'ions halogénure, et possède une viscosité inférieure à 30 cP et une tension superficielle de 20 à 55 dynes/cm à 20°C.

11. Composition selon l'une quelconque des revendications précédentes qui contient un tensioactif.

12. Procédé pour imprimer une image sur un substrat comprenant l'application sur ce dernier d'une composition selon l'une quelconque des revendications précédentes au moyen d'une imprimante à jet d'encre.

13. Papier, transparent pour rétroprojecteur ou matière textile imprimé avec une composition selon l'une quelconque des revendications 1 à 11 ou au moyen d'un procédé selon la revendication 12.

14. Cartouche d'imprimante à jet d'encre comprenant un réservoir et une encre, dans laquelle l'encre est présente dans le réservoir et l'encre est une composition selon l'une quelconque des revendications 1 à 11.
